# EUROPÄISCHE PATENTANMELDUNG

(11) **EP 1 970 455 A1**
(43) Veröffentlichungstag der Anmeldung: **17.09.2008**
(21) Anmeldenummer: 07004983.8
(22) Anmeldetag: 10.03.2007
(51) Int. Cl.: C21B 3/08, C04B 5/06, C22B 7/04, F27D 15/02

(54) **Verfahren und Anlage zur trockenen Weiterverarbeitung aller Arten von Hüttenschlacken, von dünnflüssig bis teigig**

(71) Anmelder: Hulek, Anton, Dipl.-Ing., A-4040 Linz (AT)
(72) Erfinder: Hulek, Anton, Dipl. Ing., 4040 Linz (AT); DI Dr. mont. Gert o.BRESLMAIR, 4731 Prambachkirchen (AT)

(57) **Zusammenfassung**

Zur Weiterverarbeitung von fluessiger, oder zaehfluessig, oder teigiger, oder geschaeumter Huettenschlacke wird die Schlacke am Ort ihres Entstehens mittels Trichter (1) aufgefangen, durch eingebaute Foerdereinrichtungen (5 und 6) auf einen kleinen Stroemungsquerschnitt konzentriert, dem Spalt eines Kuehlwalzenpaares (3 und 4) zugefuehrt, auf geringe Dicke gewalzt und dabei unter den Erstarrungspunkt trocken abgekuehlt, worauf die Schlacke in schuettfaehigen Stuecken in einem Befiaelter aufgefangen und weiterverarbeitet wird.

## Beschreibung

Die Erfindung bezieht sich auf ein Universalverfahren samt Anlagen zur schnellen und trockenen Kuehlung von hinsichtlich Konsistenz und Fliessverhalten sehr unterschiedlichen Huettenschlacken bis hin zu teigigen Schlacken z.B. von EAF-Oefen.

Hochofenschlacke wird trotz diverser Verfahrensvorschlaege fuer eine Trocken= kuehlung hoch immer nass granuliert, um den fuer die Zementerzeugung gewuenschten Huettensand zu erhalten. Dabei wird der kostbare Waermeinhalt der schmelzfluessigen Schlacke gaenzlich vernichtet und die Umwelt belastet.

Fuer die Kuehlung der Schlacke von LD- und EAF-Stahlwerken, sowie von anderen Huettenbetrieben werden wegen der kleineren Mengen je Abstich und auch wegen des zumeist schlechten Giessverhaltens dieser Schlacken keine speziellen Kuehlverfahren eingesetzt. Die Kuehlung dieser Schlacken erfolgt i.a. durch Einsatz von Kuebeln mit Zwischentransport in Giessbeeten. Dies erfordert zumeist eine anschliessende mechanische Zerkleinerung der Schlacke und nicht selten eine Verhaldung mit entsprechendem Lohnaufwand und sonstigen Kosten.

Dazu gehoert z.B. auch die Weiterverarbeitung der Giessereischlacke, der Entschwe= felungschlacke im Roheisenbetrieb und der Pfannenschlacke im Stranggiessbetrieb.

Die Schlacke kann relativ grosse Anteile an metallischer Schmelze enthalten. Sie wird dann samt den metallischen Anteilen in Kuebel gegossen. Die Trennung von Metall und Schlacke erfolgt mit grossem Aufwand nach der gemeinsamen Erstarrung.

Der Erfindung liegt somit die Aufgabe zugrunde, Nachteile bestehender Verfahren bzw. Anlagen zu vermeiden und heutige Anforderungen zu erfuellen, die zu einer hoeheren Qualitaet und Wertschoepfung fuehrt, weniger Kosten verursacht und bei der Herstellung die Arbeitsbedingungen des Betriebspersonales, sowie die Auswirkungen auf die Umwelt moeglichst verbessert.

Neuere Erfindungen Wie DE 30 13 557 A1, DE 28 02 941 A1, US 4 678 419 A und JP 59 119 178 A benuetzen fallweise auch Trommeln zur Kuehlung von duennfluessiger Hochofenschlacke mit zumeist tiefen Rinnen, in denen die Schlacke kristallin erstarrt.

Die Schlacke wird aus den Rinnen ausgestossen und eignet sich nicht fuer die Zement= Produktion.

Fuer eine trockene Kuehlung von LD-, EAF- und sonstige Huettenschlacken sind keine neueren Erfindungen bekannt.

Das erfindungsgemaesse Verfahren dient der trockenen Kuehlung von Schlacken folgender Betriebe: LD-Stahlwerke, EAF-Stahlwerke, Pfannenbetrieb von Stranggiess= anlagen, Entschwefelungsanlagen, sowie diverse Giessereien.

Gemaess dem neuen Verfahren fliesst oder stuerzt die Schlacke, je nach Konsistenz, am Ort ihrer Entstehung, zumeist ungeregelt in den keilfoermigen Auffangtrichter der Anlage. Die im Auffangtrichter eingebaute Foerderausruestung in Form einer Ruettelein= richtung oder von Treibrollen foerdert die Schlacke sicher zum darunter liegenden Kuehl= walzenpaar, das die Schlacke so duenn "auswalzt", dass sie sofort bis zur Erstarrung abkuehlt und in relativ kleine Plaettchen zerfaellt. Die Plaettchen werden im darunter liegenden Auffangkuebel gesammelt und einer weiteren Verwendung zugefuehrt.

Bei Pfannenschlacke und Entschwefelungsschlacke, die einen relativ grossen Metallanteil haben und infolge des Durchganges durch das Kuehlwalzenpaar ebenfalls sofort in eine duenne, durcherstarrte Form gebracht werden, koennen anschliessend die gleichzeitig entstandenen "Blechstuecke" von der Schlacke leicht getrennt werden.

Die gleiche Kuehltechnik ist auch fuer duennfluessige Hochofen- und LD-Schlacke geeignet. In diesen Faellen eruebrigt sich der Einbau einer mechanischen Foerder= ausruestung im Auffangtrichter.

So groessere Schlackenmengen pro Abstich anfallen, ist der Schlackenzulauf zu den Kuehlwalzen mithilfe eines Zwischenspeichers der Kuehlkapazitaet anzupassen.

Der kompakte Zusammenbau von Auffangtrichter und Kuehlwalzen ermoeglicht es, dass die Anlage nur fuer den Zeitpunkt des Schlackenabstiches z.B. unter den LD-Konverter oder EAF-Ofen gefahren und nach dem Abstich samt Kuebel mit dem noch gluehenden Schlackenschotter sofort ausgefahren wird. Dadurch wird der Stahlherstellbetrieb durch den Schlackenbetrieb nicht gestoert.

Da das Verfahren fuer die Verarbeitung von sehr unterschiedlichen Arten von Huetten= schlacken vorgesehen ist, muss die Anlage je nach erforderlichem Durchsatz und bestehender Konsistenz der Schlacke speziell ausgeruestet werden.

Grosse Durchsatzmengen fuehren primaer zu entsprechend langen Kuehlwalzen groesseren Durchmessers und groesserer Drehzahl. Der Auffangtrichter ist vor allem in seiner Keilbreite der Laenge der Kuehlwalzen anzupassen.

Wenn die Schlacke eine sehr unregelmaessige Konsistenz und sogar vorzeitig erstarrte Stuecke aufweist, ist ein Auffangtrichter mit eingebauten Foerderrollen am zweck= maessigsten.

Von den beiden angetriebenen Kuehlwalzen ist eine mit festen Einbaustuecken gelagert und eine mit anstellbaren Einbaustuecken. Mit den anstellbaren Einbaustuecken Wird der Walzspalt zunaechst relativ klein eingestellt, damit die Schlacke in jedem

Falle noch im Walzenspalt durcherstarrt, was besonders bei duennfluessiger Schlacke aktuell ist.

Sobald die Dicke der Schlacke, die sich aus den beiden erstarrten Halbschalen auf den Walzen bildet, groesser ist als der vorgewaehlte Walzspalt, ergibt sich eine grosse Walz kraft, die durch eine automatische Vergroesserung des Walzspaltes wieder reduziert wird.

Die Kuehlwalze mit dem anstellbaren Walzspalt und der automatischen Walzspalt= korrektur hat zugleich eine Ueberlastsicherung, damit etwaige Festkoerper der Schlacke keine mechanische Schaeden verursachen koennen. Sind in der Schlacke erfahrungsgemaess oefter Festkoerper enthalten, so ist ueber dem Auffangtrichter ein Gitter vorzusehen.

Im Gegensatz zur Warmwalzung metallischer Baender darf beim beschriebenen Walz= betrieb zur Schlackenkuehlung eine ungleichmaessige Dicke des Produktes entstehen. Das Kriterium ist der noetige Durchsatz mit sicherer und rascher Durcherstarrung

Die erforderliche Anstellung wird mithilfe der eingebauten Ausruestung automatisch geregelt.

Die Antriebe der Foerderrollen im Auffangtrichter sind selbstverstaendlich mit dem Antrieb der Kuehlwalzen abgestimmt, um keinen Stau zu verursachen. Beide Antriebe haben die noetige Drehzahlregelung.

Fuer die Abfuhr der auf die Rollen, Kuehlwalzen und Auffangtrichter uebertragenen Waerme verfuegen diese ueber eine geschlossene Wasserinnenkuehlung. Die

Waerme kann dadurch genuetzt werden. Die Weiterkuehlung der zunaechst im darunter liegenden Auffangkuebel befindlichen Schlacke erfolgt am Zellenplattenband und, bei grossen Durchsaetzen, im nachfolgenden Kuehlschacht.

Diese Aggregate sind mit Strahlungskoerpern und Luftkuehlkomponenten ausgestattet. Die abgefuehrte Waerme kann durch die Waerme des Heiswassers der Rollen, Kuehlwalzen und des Auffangtrichters ergaenzt und gemeinsam genuetzt werden.

In den Zeichnungen ist der Erfindungsgegenstand weitgehend schematisch veran= schaulicht und zwar zeigen.
- Fig. 1 den Kernteil der Anlage mit ungeteiltem, federnd aufgehaengtem Auffangtrichter und Kuehlwalzenpaar
- Fig. 2 einen Querschnitt durch die Anlage mit geteiltem Auffangtrichter, ausgestattet fuer den Einbau von Ruetteleinrichtungen
- Fig. 3 einen Querschnitt durch die Anlage mit geteiltem Auffangtrichter, beidseitig ausgestattet mit Foerderrollen.

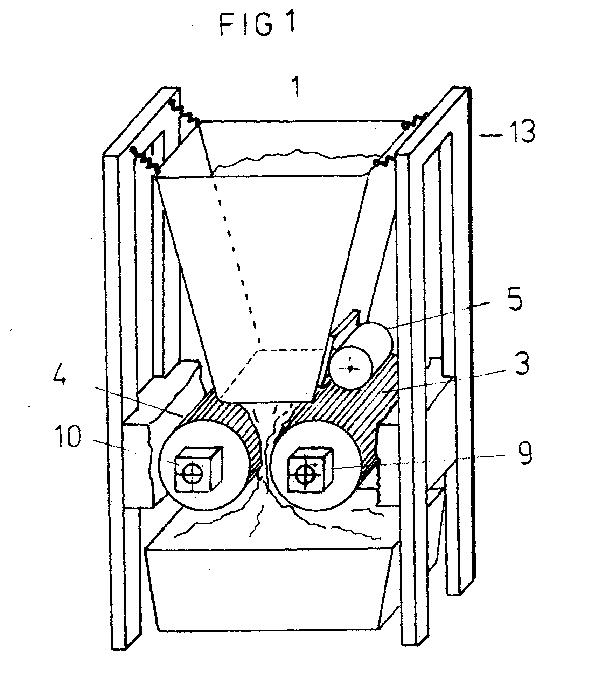

Gemaess Fig. 1 umfasst die Anlage einen ungeteilten, keilfoermigen, federnd aufgehaengten Auffangtrichter Pos. 1, zwei Kuehlwalzen Pos. 3 und 4, eine Ruetteleinrichtung Pos. 5 und Einbaustuecke fuer die Kuehlwalzen Pos. 9 und 10. Saemtliche Teile sind in eine Stahlkonstruktion Pos. 13 eingebaut.

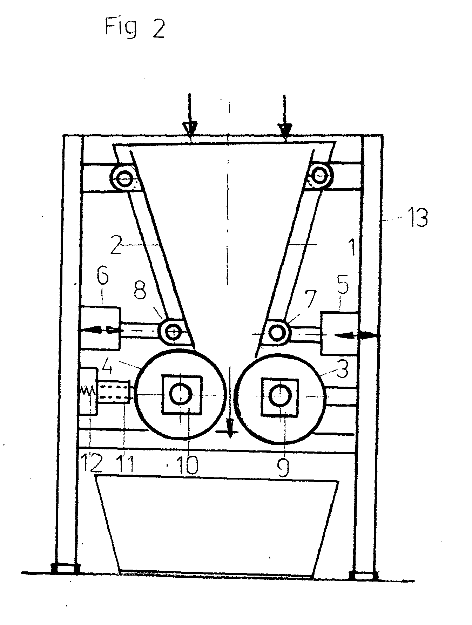

Fig. 2 umfasst eine Anlage mit einem geteilten Auffangtrichter Pos. 1 und 2, zwei Kuehlwalzen Pos. 3 und 4, zwei Ruetteleinrichtungen Pos. 5 und 6 mit Anschluessen Pos. 7 und 8, Einbaustuecke fuer die Kuehlwalzen Pos. 9 und 10, eine Walzen= anstellung Pos. 11 und eine Ueberlastsicherung Pos. 12. Saemtliche Teile sind in ein Gehaeuse mit Stahlunterkonstruktion Pos. 13 eingebaut.

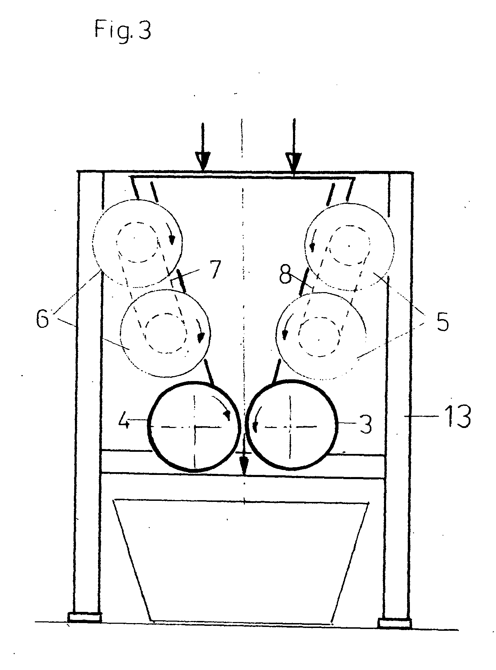

Fig. 3. Die Ausfuehrung gemaess Fig. 3 gleicht weitgehend jener gemaess Fig. 2.

Die Ruetteleinrichtungen werden jedoch durch Foerderrollen Pos. 5 und 6 ersetzt, die an jeder Seite durch Ausnehmungen der Wand in den Auffangtrichter hineinragen und mit einem Kettenantrieb Pos. 7 und 8 ausgestattet sind. Walzenanstellung, Einbaustuecke der walzen und Ueberlastsicherung sind jenen der Fig. 2 gleich.

Die Kuehlwalzen verfuegen ueber nicht dargestellte Gelenkwellen und Verteiler= getriebe fuer den Antrieb.

Unter den Kuehlwalzen befindet sich der ausfahrbare Auffangkuebel fuer die erstarrte, aber noch heisse Schlacke, die durch das Herabfallen und die Waermespannungen von selbst in Plaettchen zerbricht.

Das Gehaeuse endet nach unten mit Standsaeulen, zwischen denen der Auffangkuebel den noetigen Platz findet.

Da die gesamte Anlage mobil gebaut ist, damit sie zum jeweiligen Schlackenabstich ein- und ausgefahren werden kann, sind an der Gehaeuseaussenseite die Steckver= bindungen fuer den Elektro-Antrieb und den Kuehlwasserkreislauf montiert. Zwischen dem Gehaeuse und dem Auffangtrichter ist eine Wasser- oder Geblaeseluftkuehlung eingebaut.

## Patentansprüche

1. Verfahren zur Weiterverarbeitung von erschmolzener Huettenschlacke, **dadurch gekennzeichnet, dass** fluessige, oder zaehfluessige, oder teigige, oder geschaeumte Huettenschlacke am Ort ihres Entstehens mittels Trichter (1) aufgefangen, auf einen kleinen Stroemungsquerschnitt konzentriert, anschliessend durch den Spalt zweier angetriebener, gekuehlter Walzen (3 und 4) gefoerdert, auf geringe Dicke gewalzt und gleichzeitig unter den Erstarrungspunkt trocken abgekuehlt wird, sodass sie in schuettfaehige Stuecke zerfaellt und leicht abtransportiert werden kann.

2. Vorrichtung nach Anspruch 1, **dadurch gekennzeichnet, dass** die Vorrichtung mit einem keilfoermigen Auffangtrichter mit mindestens einer seitlichen Ruetteleinrichtung ausgestattet ist, um die noch gluehende Schlacke zu verdichten, vorzubrechen und dem Walzspalt zuzufuehren, sowie ueber ein darunter liegendes, horizontal gelagertes, innengekuehltes Walzenpaar verfuegt.

3. Vorrichtung nach Anspruch 1 und 2, **dadurch gekennzeichnet, dass** der Winkel des keilfoermigen Auffangtrichters einstellbar ist.

4. Vorrichtung nach Anspruch 1 bis 3, **dadurch gekennzeichnet, dass** eine Ruettelbewegung an mindestens einer der vier Seitenwaende des Auffangtrichters durch einen Vibrator oder dergleichen oder durch eine Exzenterbewegung bewerkstelligt wird.

5. Vorrichtung nach Anspruch 1 bis 4, **dadurch gekennzeichnet, dass** die geneigten Seitenflaechen des Auffangtrichters alternativ mit angetriebenen, gekuehlten und geriffelten Treibrollen bestueckt sind, die mit einem Teil ihrer Zylinderflaeche durch Ausnehmungen in den Hohlraum des Auffangtrichters ragen.

6. Vorrichtung nach Anspruch 1 bis 5, **dadurch gekennzeichnet, dass** der Auffangtrichter ueber eine Luft- oder Wasserkuehlung verfuegt.

7. Vorrichtung nach Anspruch 1 bis 6, **dadurch gekennzeichnet, dass** eine der zwei Kuehlwalzen ueber eine automatische Walzspaltverstellung mit Ueberlastsicherung verfuegt.

8. Vorrichtung nach Anspruch 1 bis 7, **dadurch gekennzeichnet, dass** sie sehr kompakt ausgefuehrt ist, auf ein Tiefladefahrzeug gestellt und unter den Schlackenausguss der metallurgischen Schmelzvorrichtung gefahren werden kann.

9. Vorrichtung nach Anspruch 1 bis 8, **dadurch gekennzeichnet, dass** sich unter dem Kuehlwalzenpaar ein Sammelbehaelter fuer die erstarrte, plaettchenfoermige, noch gluehende Schlacke befindet, der beim Ausfahren der Vorrichtung mitgenommen wird.
